# EUROPEAN PATENT APPLICATION

(11) **EP 1 406 439 A2**
(43) Date of publication of application: **07.04.2004**
(21) Application number: 03020184.2
(22) Date of filing: 05.09.2003
(51) Int. Cl.: H04N 5/782

(54) **Recording /reproducing apparatus**

(30) Priority: 09.09.2002 JP 2002262530
(71) Applicant: Orion Electric Company, Ltd., Takefu-shi, Fukui-ken (JP)
(72) Inventor: Tsurusaki, Tetsuo, Takefu-shi Fukuhi-ken (JP); Mizushima, Yoshinori, Takefu-shi Fukuhi-ken (JP)
(74) Representative: Kirschner, Klaus Dieter, Dipl.-Phys.

(57) **Abstract**

A recording/reproducing apparatus which can set up another timer reservation program while a timer reservation recording is continuously kept performing. When an "additional reservation" key is operated in the course of a timer reservation recording execution, an additional reservation screen is displayed. On the basis of an end time of a program currently in the course of recording execution, a recording start time of an additional reservation is input by calculating as to the time when a recording start time of a desired program starts after the recording end time. A recording time, a channel number or the like are also input together. When the "additional reservation" key is again operated, a new timer reservation program is set up. Even in the midst of such setting up, a timer recording is being performed.

## Description

### BACKGROUND OF THE INVENTION

### Field of the Invention:

The present invention relates to a recording/reproducing apparatus which performs recording on the basis of a timer reservation program set up beforehand.

### Prior Art:

In a recent recording/reproducing apparatus for recording and reproducing TV broadcast programs, there has been set up a timer reservation program including such as a recording start time, a recording end time or the like. Such a recording/reproducing apparatus has a timer reservation recording (T-REC) function for recording on the basis of a set-up timer reservation program.

In case another timer reservation recording is added after setting up a timer reservation recording, if the precedent timer reservation recording is ready and waiting for recording, the precedent timer, reservation recording is temporarily released. Then, a new timer reservation recording is set up, thereby making it possible to add a new timer reservation recording.

In case another timer reservation recording is added while a timer reservation recording is being implemented, the timer reservation recording in the course of implementing is temporarily released to set up a new timer reservation. In other words, the timer reservation recording in the course of implementing is released by operating a "timer recording" key, a screen is converted to a timer recording setting-up screen by operating a "menu" key and a new timer reservation program is set up. And a current timer reservation recording in the course of release is reopened by operating again a "timer recording" key. After a timer reservation recording ends at the predetermined recording end time, an added timer reservation recording gets to be ready and waiting for recording. When a start time comes, the added timer reservation recording is implemented.

Thus, when a timer reservation recording is to be implemented additionally, a precedent reservation has to be released temporarily. In case a timer reservation recording in the course of implementing is released temporarily, recording is interrupted in mid course, and as a result, the contents of recording becomes imperfect since videos and audios are partly lacked.

There is disclosed in Japanese Utility Model registered under No. 3071923 that the timer reservation program is connected, in case a shift time which corrects timer reservation program is input in the course of timer recording execution, by shifting only a recording end time while continuing recording.

However, the above-described Utility Model is to correct a timer reservation program in the course of execution and it can not set up another timer reservation program in order to add a new timer reservation recording.

### SUMMARY OF THE INVENTION

It is therefore an object of the present invention to provide a recording/reproducing apparatus which can add another timer reservation recording without interrupting recording in the cowtse of timer reservation recording execution.

In order to attain the above object, the recording/reproducing apparatus according to the present invention is provided with a reservation means for setting up a timer reservation program, a recording means for performing recording on the basis of a set-up timer recording program, and an additional reservation means for setting up another timer reservation program while a timer reservation is continuously kept performing.

The additional reservation means includes three types such as: setting up a recording start time on the basis of an end time of a program currently in the course of recording; displaying and correcting a timer reservation program currently in the course of recording and setting up a fresh timer reservation program; setting up a timer reservation program on the basis of an input code information. Any one of these new timer reservation programs is set up so as to start recording later than the recording end time of a program in the course of timer reservation program execution.

Namely, another timer reservation program is processed in the form of adding to the timer reservation program in the course of timer reservation program execution. Consequently, a timer reservation program in the course of execution is not interrupted, and recording is kept implementing

In setting up another timer reservation program by correcting a timer reservation program in the course of execution, recording can be kept implementing. Another timer reservation program is set up by displaying the timer reservation program currently in the course of timer reservation program execution and correcting the program. Recording is not interrupted while another timer reservation program is being set up, and the recording is executed based on the thus corrected timer reservation program.

### BRIEF DESCRIPTION OF THE DRAWINGS

For a better understanding of the invention, reference is made to the accompanying drawings, in which:
Fig. 1 is a block diagram showing one embodiment of a recording/reproducing apparatus according to the present invention;
Fig. 2 is a flow chart of reservation in the manner of additional reservation,
Fig. 3 is a view showing a screen display for inputting at the time of additional reservation;
Fig. 4 is a flow chart of reservation in the manner of easy reservation;
Fig. 5 is a view showing a screen display at the time of selecting an easy reservation;
Fig. 6 is a view showing a screen display for inputting at the time of easy reservation,
Fig. 7 is a flow chart of reservation in the manner of G code reservation; and
Fig. 8 is a view showing a screen display for inputting at the time of G code reservation.

### DETAILED DESCRIPTION OF THE PREFERRED EMBODIMENTS

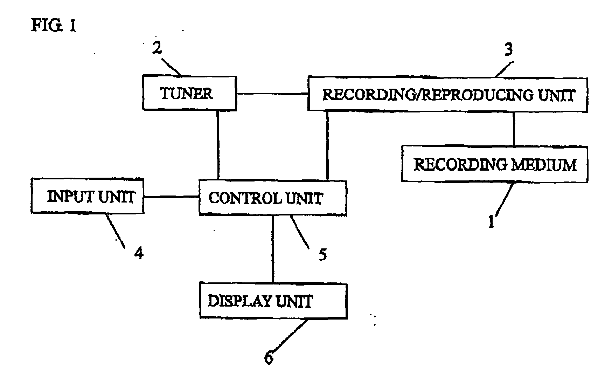

One embodiment of a recording/reproducing apparatus according to the present invention is shown in Fig. 1. The present recording/reproducing apparatus is for recording video signals input from outside on a recording medium such as a hard disc, a magnetic tape or the like, which comprises a tuner 2, a recording/reproducing unit 3, an input unit 4, and a control unit 5 to which a display means 6 such as a TV, a monitor or the like are connected.

Video signals received from a ground wave broadcasting, a BS broadcasting or a cable network are input to the tuner 2. The tuner 2 selects video signals of a selected channel, and the received video signals are output to the recording/reproducing unit 3. The recording/reproducing unit 3 implements a predetermined processing in response to the recording medium 1 and records video pictures by recording video signals on the recording medium 1. When recorded programs are reproduced, the recording/reproducing unit 3 reads out video signals from the recording medium. Then, processed signals are output to the display unit 6 and a speaker.

The input unit 4 is an operation panel for a remote controller or the main body of the apparatus, operating to record and reproduce programs. At the input unit 4, a timer reservation program is set up by inputting contents of reservation such as the date and time, a recording start time, a recording end time and channel numbers. That is, the input unit 4 has a function as a reservation means.

The control unit 5 comprised of a microcomputer controls the tuner 2, the recording/reproducing unit 3 and the display unit 4 on the basis of the contents input from the input unit 4, and moreover implements recording on the basis of a set-up timer reservation program. In addition, the control unit 5 has a function to set up another timer reservation recording in the course of timer reservation recording execution. In other words, the control unit 5 sets up a new timer reservation program on the basis of the contents input from the input unit 4 while implementing a timer reservation recording. Besides, even if a precedent timer reservation recording is ready and waiting for recording, a new timer reservation recording can be setup.

As additional reservations in the course of recording, there are following methods, i.e. an additional reservation method which sets up a recording start time on the basis of an end time of a program currently in the course of recording; an easy reservation method which displays and corrects a timer reservation program currently in the course of recording; and a G code reservation method which reserves by G code (registered trademark) utilizing code information.

According to a usual sequence of a timer reservation recording, first, a "menu" key of a remote controller is operated in order to display a list of menu on a display unit, and a timer recording reservation is selected. Thereafter, a date, a recording start time, a recording end time, a channel number, a recording mode, a genre and a place to be recorded are input to set up a timer reservation recording. When a further reservation is to be set up, the above-described operation is repeated. After that, when a "T-REC" key is operated, the set-up timer reservation program stands by for recording. When the set-up recording start time comes, timer recording starts. When a "T-REC" key is operated during the time of standing by for recording or during recording execution, the set-up timer reservation recording is released.

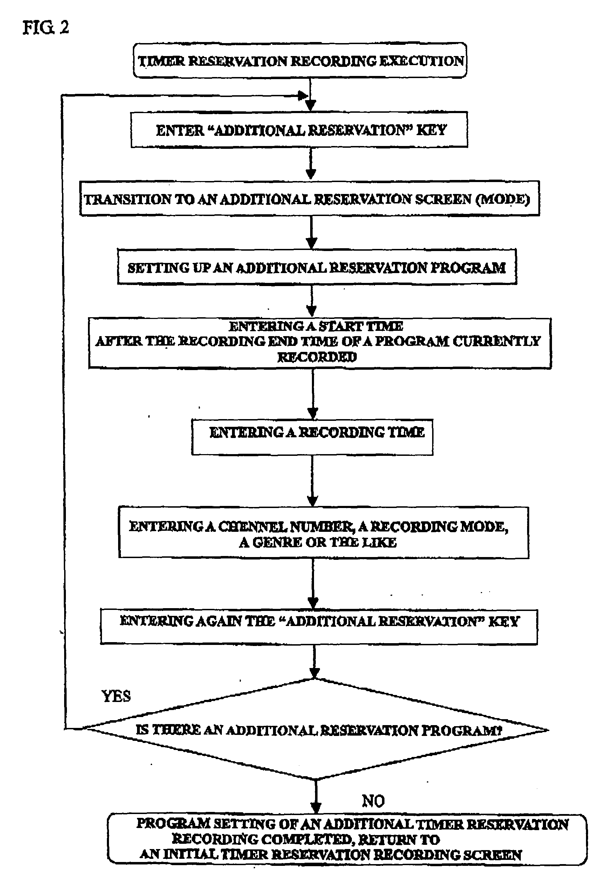

Now, the sequence of operations to add a reservation during recording execution by the additional reservation method will be explained hereunder with reference to Fig. 2. In the course of timer reservation program execution, an "additional reservation" key of the remote controller is operated in order to convert the current mode to an additional reservation mode. Usually, when the "T-REC" key is operated, a timer reservation recording is released. However, in the additional reservation mode, priority is given to the timer reservation recording in the course of recording execution, so that input from the "T-REC" key is prohibited from receiving,

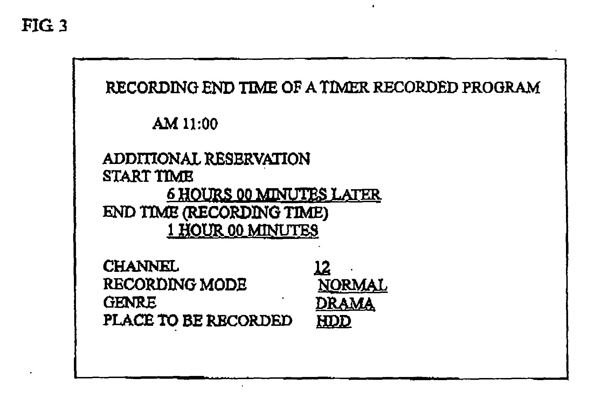

When converted to an additional reservation mode, such a screen as shown in Fig. 3 is displayed on the display unit 6. The time AM11:00, which is a recording end time of the timer reservation recording in the course of execution, is displayed. Based on the displayed time, calculation is made as to the time when a recording start time of a desired program starts after the recording end time. A recording start time of a new timer reservation recording is input by using a numeric pad or a time up/down key or the like. In case a program of PM5:00∼PM6:00 is recorded, for example, recording starts after 6 hours counting from the recording end time of the current program in the course of recording. Accordingly, "6 hours 00 minutes" is input as a recording start time and "1 hour 00 minutes" based on the required recording time is input as a recording end time. Subsequently, a channel number, a recording mode, a genre and a place to be recorded are input respectively After such operations, by operating the "additional reservation" key, a timer reservation program is finally set up. If there is a plurality of programs to be reserved additionally, after operating again the "additional reservation" key, the above-described input operations are repeated.

In case a recording time zone of a newly set-up timer reservation recording is already occupied by another timer reservation program, a user's attention is called to a display stating that no reservation can be made in order to avoid a recording mistake.

After a set up of a timer reservation program is completed, a screen is switched to an initial screen of a timer reservation recording. Even in the midst of such setting up, a timer recording is being performed. Thus, it may be said that a mere additional processing is performed at the control unit 5.

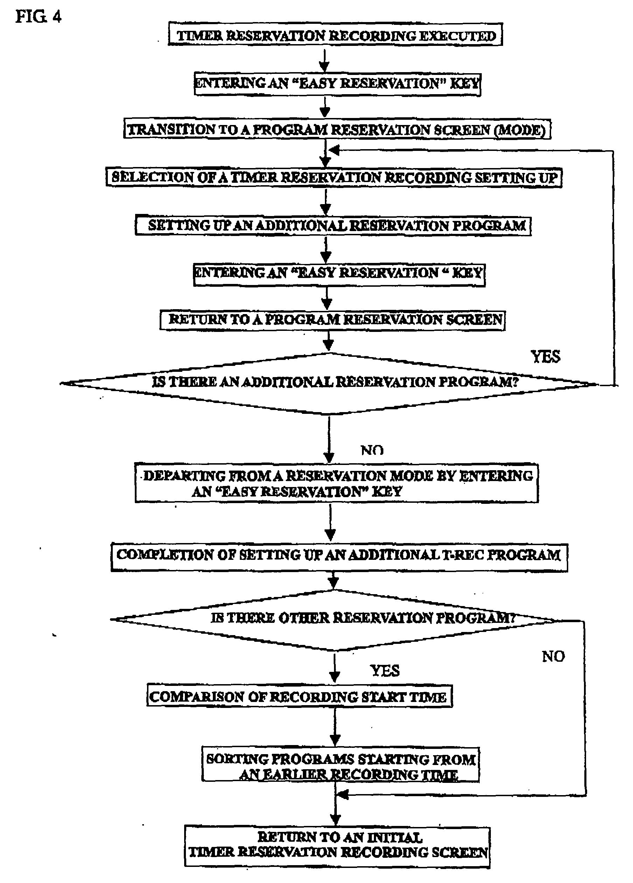

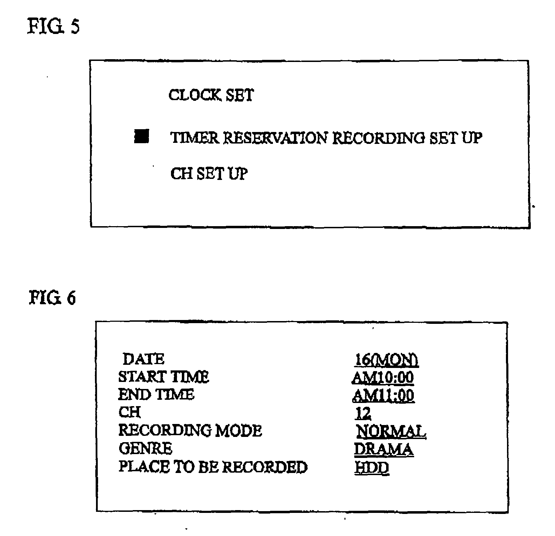

Next, the sequence of operations how to add a reservation by the easy reservation method will be explained hereunder with reference to Fig. 4. In the course of timer reservation program execution, an "easy reservation'' key is operated in order to convert the current mode to a program reservation mode. When converted to a program reservation mode, such a screen as shown in Fig. 5 is displayed on the display unit 6.

When "setting up a timer reservation recording" is selected, a screen for inputting a timer reservation program is displayed. As shown in Fig. 6, a timer reservation program currently in the course of execution is displayed. Then, a date, a recording start time, a recording end time, a channel number, a recording mode, a genre and a place to be recorded are changed by using a numeric pad or a time up/down key. When an additional reservation program is set up in such a manner, by operating an "easy reservation" key, the screen is changed to the program reservation screen as shown in Fig. 5. In case there is a plurality of programs to be added, the above-described operations are repeated.

After setting up of all desired timer recording programs is completed, in case the "easy resetvation" key is operated at the time when the program reservation program as shown in Pig. 5 is displayed, the screen is changed to the timer reservation program screen. Here, in case there is a plurality of set-up timer reservation programs, these timer reservation programs are sorted in order of time starting from younger time or in order of genre by comparing the recording start time of the set-up timer reservation programs. Even in the midst of such setting up, a timer recording is being performed. Thus, it may be said that a mere additional processing is performed at the control unit 5.

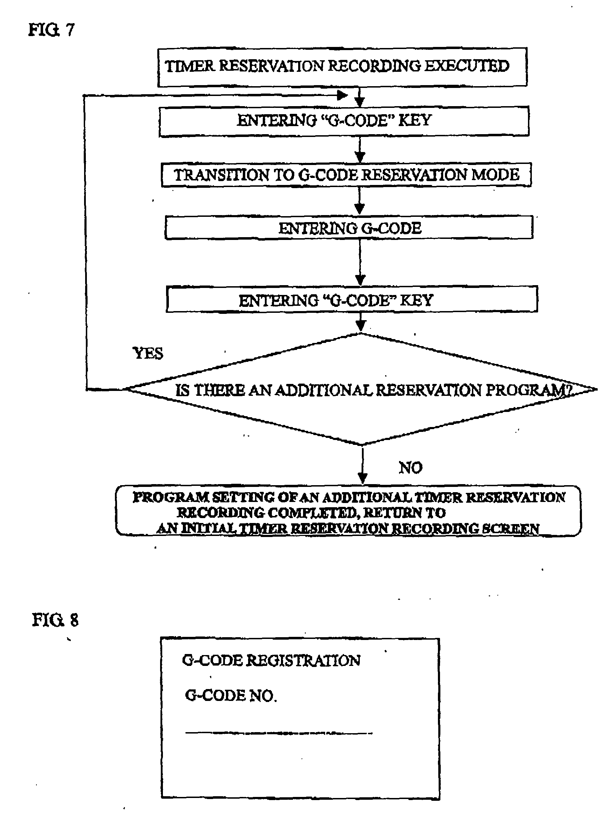

Next, the sequence of operations how to add a reservation by the G code reservation method will be explained hereunder with reference to Fig. 7. In the course of timer reservation program execution, a "G code reservation" key is operated in order to convert the current mode to a G code reservation mode. When converted to a G code reservation mode, such a screen as shown in Fig. 8 is displayed on the display unit 6. Then, a G code with respect to a program to be recorded is input. By operating the "G code" key, a timer reservation program by the G code method is set up, and the screen is converted to a screen of a timer reservation recording. If there is a plurality of programs to be reserved additionally, the above-described input operations are repeated. In this case, a G code available for inputting is for programs which start after the recording end time of the program currently in the course of recording execution. When a G code is input which starts before the recording end time of the currently in the course of recording execution, a user's attention is called to a display stating that no reservation can be made.

In any one of the above-described three reservation methods, a timer reservation program is set up by means of a key other than the "T-REC" key. Accordingly, the thus set-up timer reservation program cannot be released, and as a result, a new timer reservation program can be set up while continuing to execute recording, thereby making it possible to enhance a user's convenience.

By applying the additional reservation, a timer reservation program currently in the course of timer reservation program execution can be corrected. Namely, as in the case of the easy reservation method, by operating the "easy reservation" key, a timer reservation program currently in the course of timer reservation program execution is displayed. Then, an item to be corrected such as a recording end time or the like is selected and corrected. After that, by operating the "easy reservation" key, the corrected timer reservation program is set up, and the screen is converted to a screen of a timer reservation recording. Then, recording in accordance with the corrected timer reservation program is implemented.

Thus, it is easy to deal with the case such that a program in the course of recording is prolonged, and that a schedule of broadcasting is changed. Furthermore, even in such a case that recording is likely to be terminated in the middle of the program because a remaining capacity of a recording medium is short, a possible recording time of a recording medium can be extended by changing a recording mode, whereby termination of recording in the middle of the program can be prevented.

While there has been described in connection with the preferred embodiments of the invention, it will be obvious to those skilled in the art that various changes and modifications may be aimed, therefore, to cover in the appended claims all such changes and modifications as fall within the scope of the invention. For example, instead of hard disks, rewritable DVDs, CDs, and semiconductor memories are acceptable as a recording medium. Further, not only in the course of recording execution, an additional reservation recording may be performed in the course of standing by for a timer recording.

As described heretofore, according to the present invention, while executing a timer reservation recording, another timer reservation program can be set up. Accordingly, recording in the course of execution can be prevented from being terminated in the middle of a program by an additional reservation. In addition, a timer reservation program can be set up without waiting the end of recording currently executed, so that a reservation can be made at any time, thereby enhancing the usability of a recording/reproducing apparatus. Especially, the present invention is useful in case an additional reservation is needed for a program which starts recording immediately after the current recording terminates.

## Claims

1. A recording/reproducing apparatus comprising a reservation means for setting up a timer reservation program, a recording means for performing recording operation on the basis of a set-up timer recording program, and an additional reservation means for setting up another timer reservation program while a timer reservation is continuously kept performing.

2. A recording/reproducing apparatus claimed in Claim 1, wherein said additional reservation means sets up a recording start time on the basis of an end time of a program currently in the course of recording.

3. A recording/reproducing apparatus claimed in Claim 1, wherein said additional reservation means sets up a new timer reservation program by displaying a timer reservation program currently in the course of recording and correcting said timer reservation program.

4. A recording/reproducing apparatus claimed in Claim 1, wherein said additional reservation means sets up a timer reservation on the basis of an input code information.

5. A recording/reproducing apparatus claimed in Claims 1, 2, 3, or 4, wherein said additional reservation means sets up a timer reservation program by displaying a timer reservation program currently in the course of recording and correcting said timer reservation program, and said recording means continues recording on the basis of said corrected timer reservation program.
